# EUROPEAN PATENT APPLICATION

(11) **EP 1 523 160 A1**
(43) Date of publication of application: **13.04.2005**
(21) Application number: 04023907.1
(22) Date of filing: 07.10.2004
(51) Int. Cl.: H04M 1/725

(54) **Apparatus and method for sending messages which indicate an emotional state**

(30) Priority: 10.10.2003 JP 2003385957
(71) Applicant: NEC CORPORATION, Tokyo (JP)
(72) Inventor: Yomoda, Miyuki, Minato-ku Tokyo (JP)
(74) Representative: VOSSIUS & PARTNER

(57) **Abstract**

A communication apparatus and a communication method realizing highly amusing features and merchantability. A face image of the sender of a text message changes according to the contents of the message, especially symbols, marks and the like which indicate an emotional state in the message. Thereby, an image suitable for each symbol, mark or the like which indicates an emotional state in the text message is selectively displayed on a screen. Thus, the user of a communication apparatus can immediately understand sender's feeling without reading all the text message.

## Description

The present invention relates to a communication apparatus such as mobile terminals and fixed terminals and a communication method.

As an example of a conventional technique,
JP-A- 2002-334070 has proposed a device that properly cuts a part out of text data in HTML format to produce data suitable for read out. That is, the device reconstructs text that is suitably read out by disposing of parts unsuitable for read out in full text data.

Meanwhile, the parts unsuitable for read out include special characters such as picture characters, and emoticons or smileys defined by manufacturers or carriers. It is often the case that an email message fails to adequately convey sender' feelings if those characters or symbols are simply eliminated.

Besides, according the conventional technique mentioned above, HTML tags are just targets for elimination. However, it is common to enlarge the size of the font or change the style for highlighting, and the elimination of HTML tags without any process also leads to a reduction in the power of expression.

In order to improve the power of expression, HTML tags should be used as a condition of visual effects rather than eliminated so that visual effects are produced on a display when tags for picture characters or highlighted letters are detected on reading.

It is therefore an object of the present invention to provide a communication apparatus and a communication method for improving the power of expression, thus realizing highly amusing features and merchantability.

In accordance with the first aspect of the present invention, to achieve the object mentioned above, there is provided a communication apparatus comprising: an image recorder for recording images; a transmitter-receiver for transmitting and receiving a text message in a conversational style; a display for displaying the text message received by the transmitter-receiver and an image associated with the message, which has been recorded by the recorder; and a controller for changing the image according to the contents of the text message.

In accordance with the second aspect of the present invention, there is provided a communication apparatus comprising: an voice recorder for recording voice or sound; a transmitter-receiver for transmitting and receiving a text message in a conversational style; a display for displaying the text message received by the transmitter-receiver; a vocalizing section for converting the text message into voice or sound to announce the message; and a controller for changing the voice or sound according to the contents of the text message.

In accordance with the third aspect of the present invention, there is provided a communication apparatus comprising: an image recorder for recording images; an voice recorder for recording voice or sound; a transmitter-receiver for transmitting and receiving a text message in a conversational style; a display for displaying the text message received by the transmitter-receiver and an image associated with the message, which has been recorded by the recorder; a vocalizing section for converting the text message into voice or sound to announce the message; and a controller for changing the image and the voice or sound according to the contents of the text message.

In accordance with the fourth aspect of the present invention, there is provided a communication method comprising the steps of: recording images by an image recorder in advance; transmitting and receiving a text message in a conversational style by a transmitter-receiver; displaying the text message received by the transmitter-receiver and an image associated with the message, which has been recorded by the recorder, on a display; and changing the image according to the contents of the text message.

In accordance with the fifth aspect of the present invention, there is provided a communication method comprising the steps of: recording voice or sound by an voice recorder in advance; transmitting and receiving a text message in a conversational style by a transmitter-receiver; displaying the text message received by the transmitter-receiver; converting the text message into voice or sound to announce the message by a vocalizing section; and changing the voice or sound according to the contents of the text message.

In accordance with the sixth aspect of the present invention, there is provided a communication method comprising the steps of: recording images by an image recorder in advance; recording voice or sound by an voice recorder in advance; transmitting and receiving a text message in a conversational style by a transmitter-receiver; displaying the text message received by the transmitter-receiver and an image associated with the message, which has been recorded by the recorder, on a display; converting the text message into voice or sound to announce the message by a vocalizing section; and changing the image and the voice or sound according to the contents of the text message.

The image may be a face image, a moving image and/ or graphics including images of face parts.

The images of face parts may include at least patterns of eyebrows and a mouth.

The communication apparatus may further comprise a build-in camera for taking a face image, a moving image or a picture of the sender of the text message.

The voice or sound may be human voice, music and/ or sound effects.

The objects and features of the present invention will become more apparent from the consideration of the following detailed description taken in conjunction with the accompanying drawings in which:
Fig. 1 is a block diagram showing the construction of a communication apparatus according to an embodiment of the present invention;
Fig. 2 is a diagram showing the rules applied in the communication apparatus depicted in Fig. 1;
Fig. 3 is a flowchart showing the operation of the communication apparatus depicted in Fig. 1;
Fig. 4A is a diagram showing an example of a chat screen displayed on the communication apparatus depicted in Fig. 1;
Fig. 4B is a diagram for explaining the operation of the communication apparatus depicted in Fig. 1;
Fig. 5 is a flowchart showing the operation to frame rules for determining whether or not to put an expression on an image;
Fig. 6A is a diagram showing an example of a diary screen displayed on the communication apparatus depicted in Fig. 1;
Fig. 6B is a diagram showing another example of a diary screen displayed on the communication apparatus depicted in Fig. 1;
Fig. 6C is a flowchart showing the operation of a cellular phone for composing an email message;
Fig. 6D is a flowchart showing the operation of a cellular phone for displaying a received email message;
Fig. 7A is a diagram for explaining the concept of calendar display on the communication apparatus depicted in Fig. 1;
Fig. 7B is a diagram showing an example of a calendar screen displayed on the communication apparatus depicted in Fig. 1; and
Fig. 7C is a diagram showing a part of the calendar screen on larger scale.

First, characteristics of the present invention will be described.

In accordance with the present invention, a communication apparatus such as a cellular phone is provided with a telephone directory function for recording pictures taken by a camera such as a digital camera and a function for transmitting and receiving a simple message realized by making use of email service or short messaging service (hereinafter referred to as a chat function). Besides, the communication apparatus such as a cellular phone has a message display screen for chat in addition to a display screen for transmitting and receiving ordinary messages to implement the chat function. The cellular phone also has a function for producing face data by defining the position and size of each part, such as eyebrows, eyes, a nose, and a mouth, formed with aggregates of three-dimensional polygon data (minimum unit to form an object in computer graphics, in which polygons are used for modeling, while triangles or quadrangles, being easy to use in hardware, are often used for final rendering) with respect to a two-dimensional image. Data of the part may be combined with the second polygon data to change or transform the part, thereby providing more expressive display. Thus, when an email message contains a special character such as a picture character and an emoticon, an image displayed on the display screen for chat (hereinafter referred to as chat screen) can be changed with the data.

In other words, in accordance with the present invention, when a user is chatting through the use of an email function of his/ her communication apparatus such as a mobile terminal and a fixed terminal, if a received email message contains text, a keyword, a symbol or a picture character for changing an image, the image displayed on the chat screen and/ or voice or sound is/ are automatically changed.

Next, an embodiment of the present invention will be described. In the following description, a cellular phone is employed as a communication apparatus.

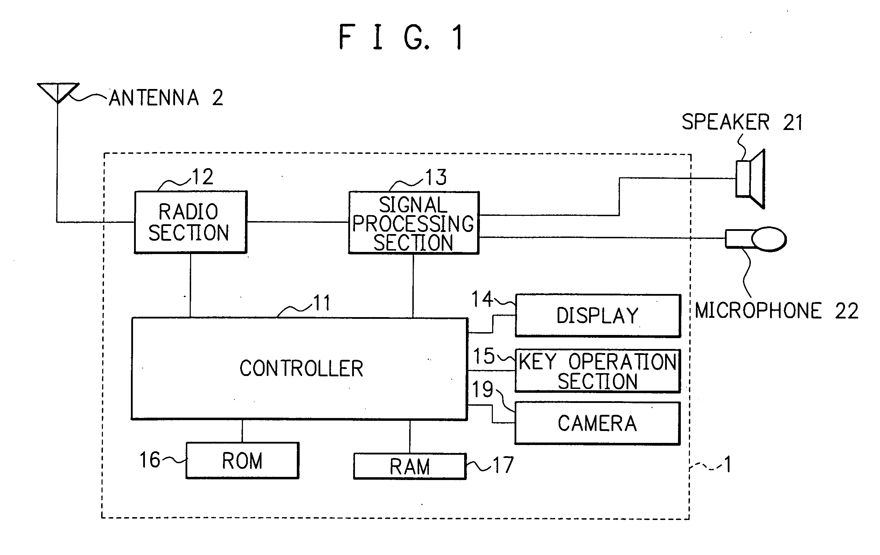

Fig. 1 is a block diagram showing the construction of a communication apparatus according to an embodiment of the present invention. Referring to Fig. 1, a cellular phone as a communication apparatus comprises a radio circuit 1 for transmission and reception, an antenna 2 for transmitting and receiving electric waves, a speaker 21 for vocalizing an email message and a microphone 22. Examples of the antenna 2 includes omni-directional antennas such as a whip antenna, a rod antenna, a helical antenna and a patch antenna, and directional antennas such as a dipole antenna and a inverted L antenna.

The radio circuit 1 comprises a radio section 12 for transmission and reception, a signal processing section 13 for processing signals sent/received to/ from the radio section 12, a display 14 for displaying a variety of information, a key operation section 15 for key operations, a ROM (Read Only Memory) 16 for storing data of fonts, face parts, picture characters and the like for displaying received email messages and various displays, and a RAM (Random Access Memory) 17 for storing data of received email messages, images and voice or sound, and a camera 19 for taking photographs, moving pictures, etc. The radio circuit 1 further comprises a controller 11 for controlling the aforementioned components, that is, the radio section 12, signal processing section 13, display 14, key operation section 15, ROM 16 and RAM 17 connected with the controller 11. In addition, the cellular phone is provided with a chat screen.

The RAM 17 includes an image storage for storing data of photographs, moving pictures and the like taken by the camera 19, a voice storage for storing voice or sound data, and a text storage for storing text data such as transmitted/ received email message and addresses. The image storage and text storage form a telephone directory.

The controller 11 has a function for changing an image and/ or voice or sound according to the contents of a text message in addition to the control function. The signal processing section 13 converts ordinary call data received via the radio section 12 into voice data, and also converts a text message into voice data. The speaker 21 vocalizes signals converted into voice data by the signal processing section 13. The display 14 may be, for example, a liquid crystal panel. The camera 19 may be a digital camera using a CCD (Charge Coupled Device).

The image is formed of three layers each corresponding to a facial expression or a face image, an optional expression and a visual effect, and includes face parts. A facial portrait of the sender of email previously taken with the built-in camera of the cellular phone may be used as the face image. Also a facial portrait of a sender attached to his/her email message may be used as the face image. Face image data may be two-dimensional image data or three-dimensional image data.

Besides, if there is no face image of the sender of email, graphics stored in the cellular phone can be used as a substitute. Examples of the graphics include the face of an animal such as a dog and a cat, and a popular cartoon character.

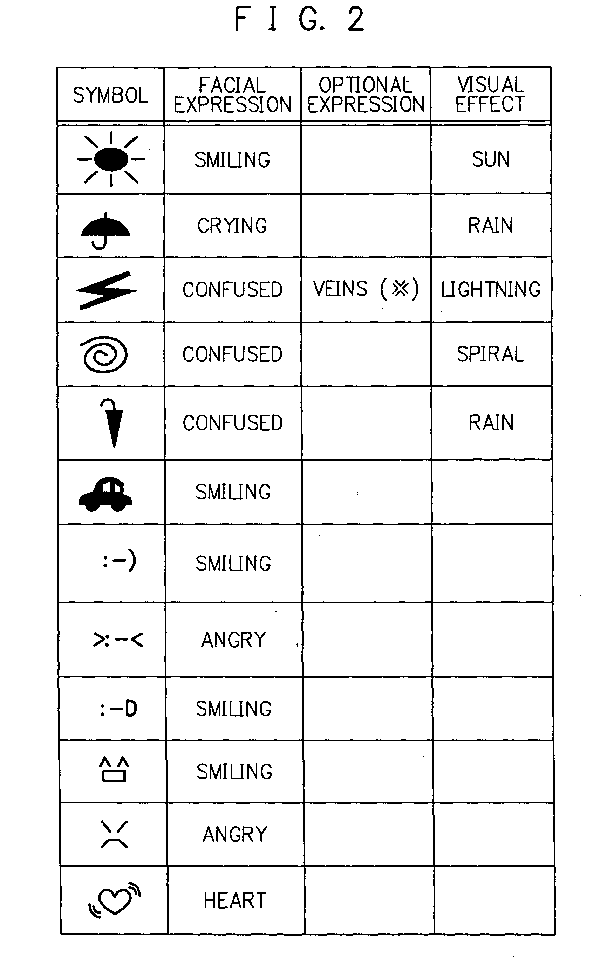

In this embodiment, the optional expression indicates particular symbols or marks added to a facial expression or a face image. As an example of the optional expression may be given the symbol shown in Fig. 2 representing veins that stand out at the temple with anger. The visual effect indicates, as can be seen in Fig. 2, background images of sunshine, rain and the like used as a background to a facial expression or a face image.

Incidentally, the three layers, each corresponding to the facial expression or face image, optional expression and visual effect, are cited merely by way of example and without limitation. The image may be composed of four or more layers to increase patterns of the image and situations.

Fig. 2 is a diagram showing the rules applied in the cellular phone of this embodiment. In the following, a description will be given of the rules referring to Fig. 2.

As shown in Fig. 2, a symbol or a mark such as a picture character and an emoticon contained in a message acts as a trigger to change the facial expression of an image, put an optional expression to the image and produce a certain visual effect on the image.

That is, a facial expression of an image or a face image is changed according to each symbol or mark in a message, and the image is displayed with an optional expression and a visual effect. In the example of Fig. 2, a facial expression "smiling" corresponds to a mark of the "sun" in a message, while a visual effect, a background image of "sunshine", corresponds to the mark. A facial expression "crying" and a visual effect "rain" correspond to an "open umbrella" mark. A facial expression "angry" and a visual effect "lightning" correspond to a "lightning" mark. In addition, an optional expression, veins that stand out at the temple with anger, is put on a face image for the "lightning" mark. A facial expression "confused" corresponds to a "spiral" mark. As a visual effect, a curved line winds around a face image. A facial expression "confused" and a visual effect "rain" correspond to a "closed umbrella" mark. A facial expression "smiling" corresponds to a "car" mark. As a visual effect, a background image of the ocean as well as of the mountains may be displayed together with a face image.

While Fig. 2 shows three types of items, facial expressions or face images, optional expressions and visual effects, with respect to each mark by way of example, there may be two, four or more items. Besides, a user may arbitrarily select one or more items to control the display operation of the cellular phone. For example, a face image having a certain facial expression may be displayed together with a visual effect without any optional expression. In addition, if a user does not want to display a face image, the user can select the setting with the key operation section 15 so that a face image is not to be displayed during a chat.

Examples of the face parts include hair, eyebrows, eyes, a nose, a mouth, ears, and the contour of a face. A user may make cheeks of a face image blush or the face pale. The image of each face part may be a two-dimensional image or a three-dimensional image as with a face image. A user can freely determine the position and size of each face part image. The position of a face part described above includes the relative position of the face part with respect to a face image and the absolute position on the display. Besides, a user may define frames for the respective face parts (eyebrows, eyes, a nose, a mouth, ears, etc.), and change or transform designated face part images within the frames. For example, a user may move lips of the mouse part while a message is being read.

Incidentally, the description has been made of the cellular phone with a built-in camera for taking photographs, moving pictures, graphics and the like. However, the cellular phone of this embodiment is not necessarily provided with a built-in camera. When the cellular phone has no built-in camera, the user of the cellular phone can utilize images taken by the other party.

The voice or sound produced by the speaker 21 may be human voice, music and/ or sound effects. The human voice may be real human voice as well as synthesized speech provided by the voice synthesis LSI. As for the music, for example, "Beethoven's Ninth Symphony (choral)" or pop music may be used when wards expressive of joy are displayed on the display 14, and "Beethoven's Fifth Symphony (fate)" or pop music may be used when wards showing confusion are displayed. As examples of the sound effects, a sound like thunder may come out of the speaker 21 when the "lightning" mark is displayed on the display 14. Further, an explosive sound may be emitted when the optional expression, veins standing out at the temple with anger, is put on a face image. By operating the key operation section 15, a user can select types of voice, such as male or female voice and young or old voice, and also change speed at reading.

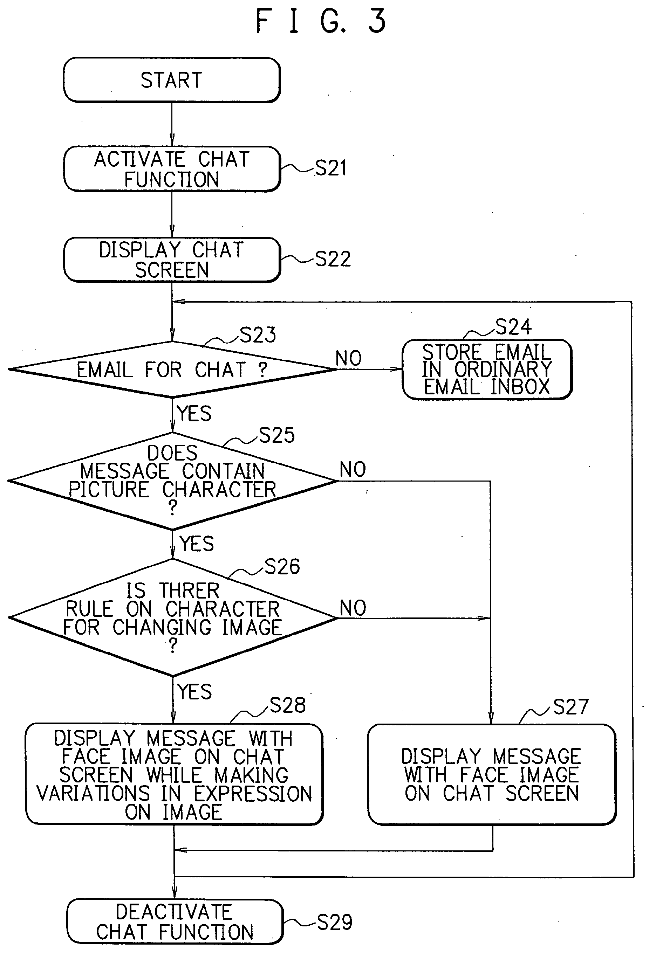

In the following, a description will be made of the operation of the communication apparatus of this embodiment referring to Fig. 3.

Fig. 3 is a flowchart showing the operation of the communication apparatus depicted in Fig. 1.

First, a user operates the key operation section 15 of his/ her cellular phone as the communication apparatus to activate the chat function (step S21) to display the chat screen (step S22). While the chat screen is displayed, the controller 11 checks or determines whether the cellular phone has received email or email for chat (step S23).

When having determined that received email is not email for chat (step S23, NO), the controller 11 stores the email message in the ordinary email inbox (step S24).

On the other hand, when having determined that email for chat has been received (step S23, YES), the controller 11 checks the sender or source of the email message, the title and the like. Subsequently, the controller 11 determines whether or not the received email message contains a picture character or an emoticon in its text (step S25).

When having determined that the email message contains neither a picture character nor an emoticon (step S25, NO), the controller 11 displays the message together with the face image of the sender on the chat screen (step S27). On this occasion, the email message may be read aloud as well as being displayed.

On the other hand, when having determined that the email message contains a picture character, an emoticon, etc. (step S25, YES), the controller 11 checks whether or not there are rules (rules that define the relationship between each of picture characters, emoticons, etc. and the facial expression, optional expression and visual effect as shown in Fig. 2) on the character for changing an image to be displayed on the chat screen (step S26).

Incidentally, the picture character indicates a symbol that each cellular phone service provider independently assigns as an external character, while the emoticon or smiley indicates a symbol designed to show the sender's emotional state in his/ her email message by a certain series of key strokes, using the character code of the emoticon symbol or the like.

When there is no rule for the picture character (step S26, NO), the controller 11 displays the email message together with the face image of the sender on the chat screen (step S27).

On the other hand, when there are rules for the picture character (step S26, YES), the controller 11 displays the email message with the face image of the sender on the chat screen while making variations in the expression on the image (e.g. making the image a smiling face or a crying face) (step S28).

After that, the cellular phone is in standby mode until it receives an email message again. The chat function is deactivated by user's key operation (step S29).

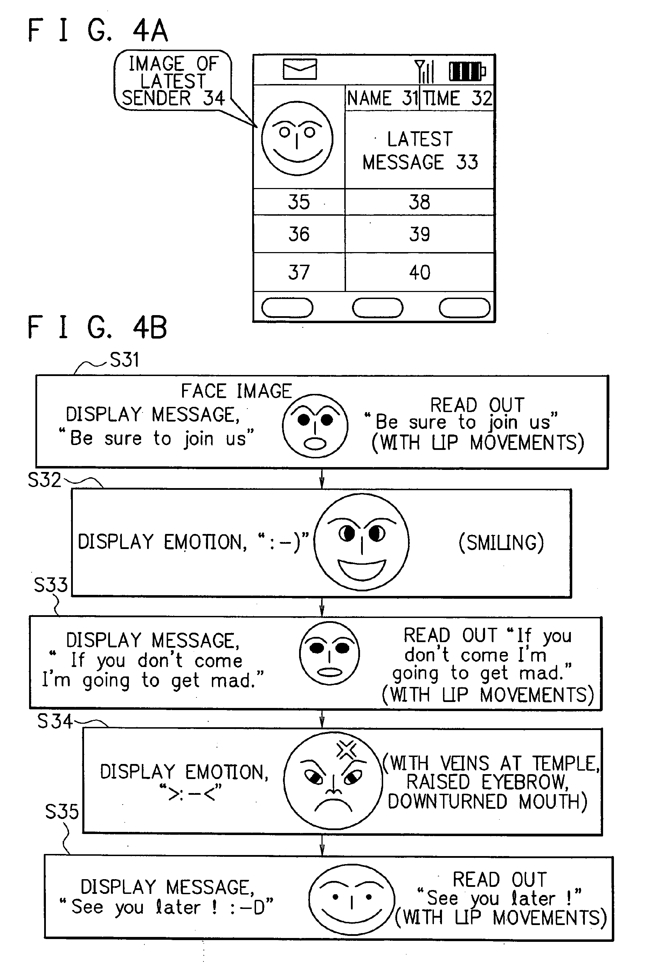

Fig. 4A is a diagram showing an example of the chat screen displayed on the communication apparatus depicted in Fig. 1. Fig. 4B is a diagram for explaining the operation of the communication apparatus.

Referring to Fig. 4A, the chat screen includes an area 31 for indicating the name of the latest sender listed in the telephone directory, an area 32 for indicating the time of receipt of the latest email message, an area 33 for displaying the text of the latest email message, an area 34 for displaying the image of the latest sender which varies in expression or the registered image of the sender, areas 35 to 37 for indicating the names of previous three senders, and areas 38 to 40 for displaying three email messages from the senders shown in the areas 35 to 37, respectively. When the name of the latest sender is not listed in the telephone directory, the email address of the sender is displayed in the area 31.

Incidentally, the number of the areas (35 to 37) for indicating the names of previous senders, and areas (38 to 40) for displaying email messages from the senders are cited merely by way of example and without limitation. The number may be one, two or more than three depending on the size of the display. In the areas 35 to 37, simplified names, such as nicknames or handle names, registered for chat may be displayed instead of the names contained in the telephone directory. Alternatively, in the areas 35 to 37, the images on a smaller scale or picture characters of the senders may be displayed instead of their names, or may be displayed together with their names.

In the case where the user has set his/ her cellular phone in reading mode by key operation, when the latest message "Be sure to join us" is displayed in the area 33, the message "Be sure to join us" is read aloud and lips of the mouse part move in the face image of the latest sender displayed in the area 34 (step S31). On this occasion, the cursor indicates a word in the message which is currently being read.

When the cursor indicates an emoticon ":-)" displayed after the message "Be sure to join us", the face image is enlarged and puts on a smile (step S32). Thereafter, the message displayed at step S31 is moved into the area 38, and the name of the sender is moved from the area 31 to the area 35.

Next, when the latest message "If you don't come, I'm going to get mad" is displayed in the area 33, the message is read aloud and lips of the mouse part move in the face image of the latest sender (step S33).

When the cursor indicates an emoticon ">:-<" displayed after the message "If you don't come, I'm going to get mad", the face image is enlarged and puts on a angry look with veins at the temple, raised eyebrows, and downturned mouth (step S34). After that, the contents of the areas 35 and 38 are moved into the areas 36 and 39, respectively. Also the message displayed at step S33 is moved into the area 38, and the name of the sender is moved from the area 31 to the area 35.

When the latest message "See you later :-D" is displayed in the area 33, the message is read aloud and lips of the mouse part move in the face image with smiling eyes (step S35). That is, the face image of the sender is displayed according to the rules shown in Fig. 2.

Incidentally, the description has been made of the operation in response to emoticons in the email message, the cellular phone as a communication apparatus of this embodiment operates in the same manner as described above for picture characters.

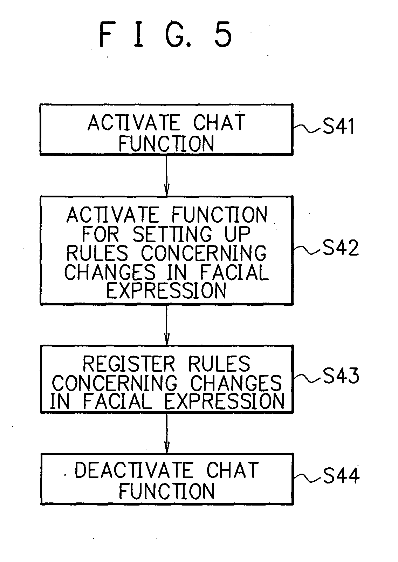

Fig. 5 is a flowchart showing the operation to frame rules for determining whether or not to put an expression on the face image.

First, a user activates the chat function (step S41), and the function for setting up rules to change the facial expression of an image (step S42). Then, the user registers rules concerning changes in facial expression, as for example making mouth turned upward in a smile if a received email message contains a picture character or an emoticon of a smiling face (step S43). The user finishes setting up rules by deactivating the chat function (step S44).

When the user receives email for chat after having set up the rules, an expression on a face image displayed on the chat screen changes according to the rules.

As is described above, in accordance with the present invention, the face image of the sender of an email message displayed on the chat screen can be changed according to a picture character, an emoticon or the like in the text of the message. Thus, the user of the communication apparatus can immediately understand sender's feeling, such as "happy" and "unhappy" without reading the text. Moreover, the movement of the image may provide amusement for the user.

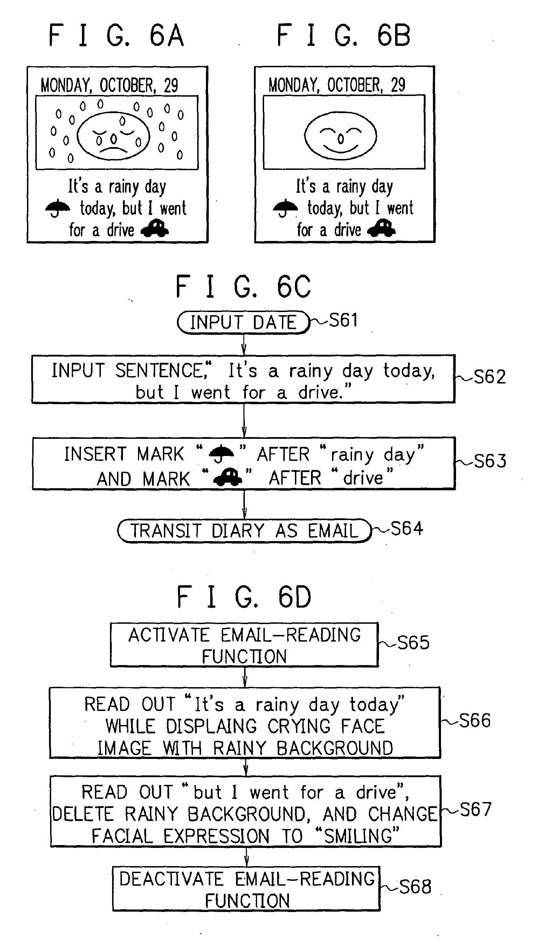

In the following, another embodiment of the present invention will be described referring to Figs. 6A to 6D.

Figs. 6A and 6B show examples of a diary screen displayed on a cellular phone as a communication apparatus of the present invention. Fig. 6C is a flowchart showing the operation of the cellular phone for composing an email message. Fig. 6D is a flowchart showing the operation of the cellular phone for displaying a received email message.

The present invention is applicable to various functions of a cellular phone as well as to chat function since it can be utilized to change images. More specifically, a personal information management function can be coupled with an email-reading function. Besides, when a user keeps a diary on his/ her cellular phone, the diary can be displayed with an image which varies according to entries in the diary.

If the user inputs the date, for example, "Monday, October, 29" (step S61 in Fig. 6C) and a sentence "It's a rainy day today, but I went for a drive" to his/ her cellular phone (step S62), and then he/ she adds picture characters to the sentence for effect as shown in Fig. 2. In this case, the user inserts a mark (picture character) of "open umbrella" after the words "rainy day", and a mark of "car" after the word "drive" on the display of the cellular phone (step S63). Subsequently, the user transmits the diary as an email message (step S64).

Having received the email message, the opposite party (receiver) operates his/ her cellular phone to activate the email-reading function (step S65 in Fig. 6D). Accordingly, a part of the sentence "It's a rainy day today" is read aloud while a face image having a facial expression "crying" is displayed together with a visual effect "rain" in response to the "open umbrella" mark as shown in Fig. 6A (step S66). On this occasion, the receiver may move lips of the mouse part in the face image while the message is being read. Subsequently, the following part of the sentence "but I went for a drive" is read aloud, and the facial expression and visual effect corresponding to the previous picture character are replaced by new ones. In other words, a face image having a facial expression "smiling" is displayed with no visual effect in response to the next picture character "car" mark as shown in Fig. 6B (step S67). On this occasion, the receiver may also move lips of the mouse part in the face image while the message is being read. After having read the entire message, the receiver deactivates the email-reading function (step S68).

Incidentally, picture characters such as "open umbrella" and "car" may be arbitrarily input by the user through the key operation section, or may be automatically added to follow particular words such as "rain" and "drive" input by the user. Additionally, sound effects including music may be provided according to a change in the expression of a face image or based on picture characters in a message.

Besides, the cellular phone may have a calendar screen showing the days with a variety of images corresponding to the mood or weather on each day.

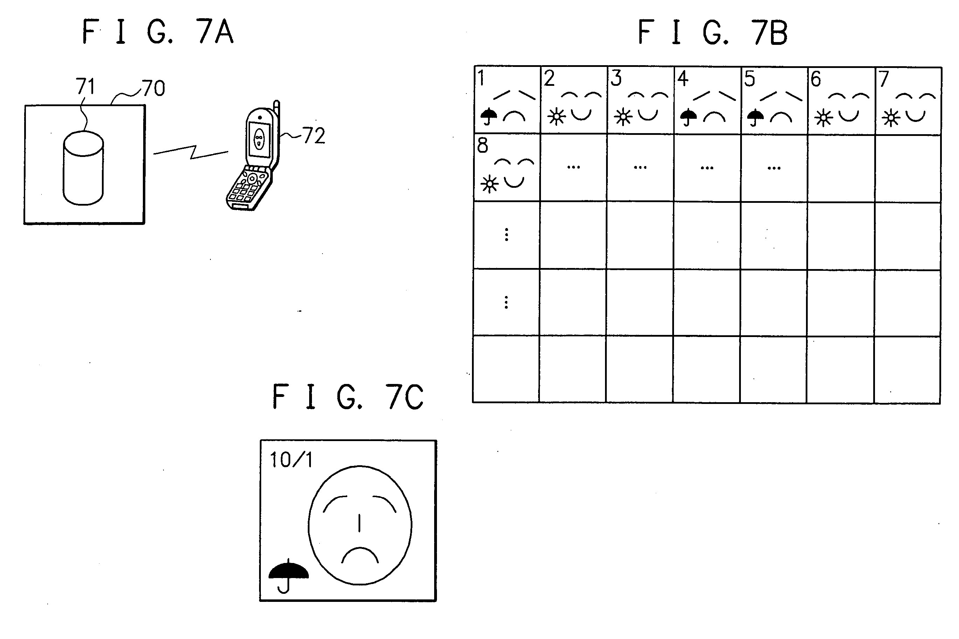

Fig. 7A is a diagram for explaining the concept of the calendar display. Fig. 7B is a diagram showing an example of a calendar screen. Fig. 7C is a diagram showing a part of the calendar screen on larger scale.

Referring to Fig. 7A, a cellular phone 72 is connected with a weather server 71 in a cellular phone service provider 70 via the Internet. When the user of the cellular phone 72 inputs a date by key operation, the cellular phone 72 displays the calendar screen in which each day are shown with a face image corresponding to the weather on the day as shown in Fig. 7B. The user may change the face image according to his/her mood on the day by key operation. Also the user may display a part of the calendar screen on larger scale as shown in Fig. 7C.

The application for the cellular phone to implement the email-reading function may be firmware. In addition, Java (a registered trademark of Sun Microsystems) may be utilized as the application.

Incidentally, the description has been made of the cellular phone as a communication apparatus. However, the cellular phone is given only as an example and without limitation. The present invention can be applied to PDA (Personal Digital Assistant), PHS (Personal Handyphone System), PC (Personal Computer), and the like. In the case where users have a chat through different communication apparatuses or cellular phones of different cellular phone service providers, codes of the respective communication apparatuses must correspond with each other to ensure compatibility between them. For example, a translation table may be provided to the communication apparatuses or servers of the cellular phone service providers.

In recent years, the users of PCs as communication apparatuses increasingly use their PCs as television telephones making use of a broadband network. However, even if the PCs provide high performance (having CPU with 2 GHz clock frequency), television pictures cannot be transmitted by low-speed Internet connection such as an analog modem line of 54 k. In such a case, by having a chat according to the communication method of the present invention, the users can experience a realistic sensation similar to that produced by a television telephone (this, however, requires consideration for a means of transmitting image data together with text data through an interface).

As set forth hereinabove, in accordance with the present invention, a face image and/ or a voice reading an email message can be changed according to symbols, marks and the like such as picture characters and emoticons in the text of the message. Thereby, the user of the communication apparatus can immediately understand sender's feeling without reading the text of the email message. Moreover, the movement of the image provides amusement for the user and thus improves the merchantability of the communication apparatus.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A communication apparatus comprising:
an image recorder for recording images;
a transmitter-receiver for transmitting and receiving a text message in a conversational style;
a display for displaying the text message received by the transmitter-receiver and an image associated with the message, which has been recorded by the recorder; and
a controller for changing the image according to the contents of the text message.

2. A communication apparatus comprising:
an voice recorder for recording sound;
a transmitter-receiver for transmitting and receiving a text message in a conversational style;
a display for displaying the text message received by the transmitter-receiver;
a vocalizing section for converting the text message into sound to announce the message; and
a controller for changing the sound according to the contents of the text message.

3. A communication apparatus comprising:
an image recorder for recording images;
an voice recorder for recording sound;
a transmitter-receiver for transmitting and receiving a text message in a conversational style;
a display for displaying the text message received by the transmitter-receiver and an image associated with the message, which has been recorded by the recorder;
a vocalizing section for converting the text message into sound to announce the message; and
a controller for changing the image and the sound according to the contents of the text message.

4. The apparatus claimed in claim 1, 2, or 3, wherein the image is a face image, a moving image and/ or graphics including images of face parts.

5. The communication apparatus claimed in claim 4, wherein:
the images of face parts include at least patterns of eyebrows and a mouth.

6. The apparatus claimed in claim 1, 2, 3, 4 or 5 comprising a build-in camera for taking a face image, a moving image or a picture of the sender of the text message.

7. The apparatus claimed in any one of claims 1 to 6, wherein the sound is human voice, music and/ or sound effects.

8. A communication method comprising the steps of:
recording images by an image recorder in advance;
transmitting and receiving a text message in a conversational style by a transmitter-receiver;
displaying the text message received by the transmitter-receiver and an image associated with the message, which has been recorded by the recorder, on a display; and
changing the image according to the contents of the text message.

9. A communication method comprising the steps of:
recording sound by an voice recorder in advance;
transmitting and receiving a text message in a conversational style by a transmitter-receiver;
displaying the text message received by the transmitter-receiver on a display;
converting the text message into sound to announce the message by a vocalizing section; and
changing the sound according to the contents of the text message.

10. A communication method comprising the steps of:
recording images by an image recorder in advance;
recording sound by an voice recorder in advance;
transmitting and receiving a text message in a conversational style by a transmitter-receiver;
displaying the text message received by the transmitter-receiver and an image associated with the message, which has been recorded by the recorder, on a display;
converting the text message into sound to announce the message by a vocalizing section; and
changing the image and the sound according to the contents of the text message.

11. The method claimed in claim 8, 9 or 10, wherein the image is a face image, a moving image and/ or graphics including images of face parts.

12. The method claimed in claim 11, wherein:
the images of face parts include at least patterns of eyebrows and a mouth.

13. The method claimed in claim 8, 9, 10, 11 or 12, wherein
a build-in camera takes a face image, a moving image or a picture of the sender of the text message.

14. The method claimed in any one of claims 8 to 13, wherein the sound is human voice, music and/ or sound effects.
